# EUROPEAN PATENT SPECIFICATION

(11) **EP 2 304 761 B1**
(45) Date of publication and mention of the grant of the patent: **12.06.2013**
(21) Application number: 09774106.0
(22) Date of filing: 24.06.2009
(51) Int. Cl.: H01J 1/62, H01J 9/20, H01J 61/32, H01J 61/35, C03C 17/32, H01J 61/46, C09D 123/08, C03C 17/34

(54) **SHATTER CONTAINMENT COATING**
BESCHICHTUNG ZUR BRUCHVERHINDERUNG
REVÊTEMENT DE RETENUE DE BRIS

(30) Priority: 30.06.2008 US 76776
(43) Date of publication of application: 06.04.2011
(73) Proprietor: Whitford Corporation, Elverson, PA 19520 (US)
(72) Inventor: CHUNG, Daniel, C., Princeton NJ 08540 (US); LINDSTROM, Michael, J., Downingtown PA 19335 (US); HARVEY, Leonard, W., Downingtown PA 19335 (US)
(74) Representative: Hedley, Nicholas James Matthew
(86) International application number: PCT/US2009/048414
(87) International publication number: WO 2010/002654

(56) References cited:
- EP-A1- 0 181 197
- US-A- 3 621 323
- US-A- 3 889 030
- US-A- 4 053 076
- US-A- 4 332 329
- US-A- 5 124 618
- US-A- 5 124 618
- US-A- 5 252 683
- US-A- 5 252 683
- US-A1- 2006 273 720
- US-B2- 7 279 522

## Description

### BACKGROUND OF THE INVENTION

1. Field of the Invention.

The present invention relates to a shatter containment coating composition for glass surfaces and, in one exemplary embodiment, relates to a shatter containment coating composition that may be used with glass surfaces of complex geometry, such as compact fluorescent light bulbs.

2. Description of the Related Art.

Incandescent light bulbs may be coated with a coating composition, such as a coating composition based on a fluoropolymer such as perfluoro alkoxy (PFA) powder, or a silicone rubber, for example. These coatings help to protect the light bulb from shattering upon receiving an impact force, such as when the light bulb is impacted by an object or when dropped onto a hard surface, and/or aid in containing shattered fragments of the light bulb when the light bulb is shattered.

Although these coatings may be useful for use with incandescent light bulbs, they have pronounced disadvantages when used with fluorescent light bulbs, such as compact fluorescent light bulbs of the type that have recently become widely used to promote energy conservation.

First, the opacity of silicone rubber and the poor flow characteristics of this material make silicone rubber coating compositions impractical for compact fluorescent light bulbs. In particular, the opacity of silicone rubber reduces the light output of compact florescence light bulbs. Additionally, silicone rubber is typically provided as a solvent-borne dispersion having a relatively high viscosity, which can make coating the material onto glass surfaces difficult and also raise environmental concerns. Finally, both fluoropolymer coatings and silicone rubber coatings require curing at much higher temperatures and curing times than compact florescence light bulbs are able to withstand. In particular, the electronic control mechanism that is attached to the glass tubing of the light bulb cannot withstand the high temperatures needed for curing, and such electronic control mechanisms will degrade in the presence of such temperatures.

What is needed is a shatter containment coating for glass surfaces and, in particular, a shatter containment coating for glass surfaces having complex geometry, such as compact fluorescent light bulbs, which is an improvement over the foregoing.
US 2006/0273720 discloses the coating of a helically-wound discharge tube with a transparent shatter-resistant coating, which may be a fluoropolymer of the Teflon family like PTFE and FEP.
EP0181197 is concerned with the application of a UV-absorbent layer on a fluorescent lamp. The UV-absorbent layer is obtained by coating the lamp with a solvent-soluble fluorine-containing polymer containing an ultraviolet light absorbent.

### SUMMARY OF THE INVENTION

The present invention provides a shatter containment coating composition for glass substrates, such as the glass tubing of compact fluorescent light bulbs. If the light bulb breaks or shatters, the coating aids in containing shattered glass fragments of the light bulb, as well as gases and other elements within the light bulb, to thereby aid in disposal of the light bulb and/or to prevent the escape of gases or other elements into the environment. The coating may be provided in the form of an aqueous dispersion having a relatively low viscosity such that, when coated onto a glass surface having complex geometry, such as the tubing of a compact fluorescent light bulb, for example, the coating can conform to the surfaces having the complex geometry. The coating may be provided in one or more layers, including a base coat in the form of an aqueous dispersion of a fluoroelastomer and, optionally, one or more overcoats, and the coating is be cured to form a film at a temperature of less than 150°C. When cured, the coating composition forms a tough, clear film that provides a high light transmittance and has been found to be effective in shatter containment when the light bulb is dropped onto a hard surface from a height as high as 8 or 9 feet (2.4 to 2.7 metres).

In a first form thereof, the present invention provides a method of applying a shatter containment coating to a glass substrate, characterized by the steps of: providing a glass substrate having a complex geometry; applying a base coat in the form of an aqueous dispersion of a fluoroelastomer to the substrate; and curing the base coat at a temperature of 150°C or less. The method may be further characterized by the additional steps, after the curing step, of: applying an overcoat to the base coat in the form of an aqueous dispersion of a modified polyolefin; and curing the overcoat.

The providing step may further comprise providing the substrate in the form of a compact fluorescent light bulb having glass tubing including a plurality of helical turns, and the applying step may further comprise immersing the glass tubing in the aqueous dispersion of a fluoroelastomer. Alternatively, the providing step may further comprise providing the substrate in the form of a compact fluorescent light bulb having glass tubing including a plurality of bent sections, and the applying step may further comprise immersing the glass tubing in the aqueous dispersion of fluoroelastomer.

The aqueous dispersion of a modified polyolefin may have a viscosity of 600 centipoise or less. The cured coating may have a thickness of between 1 mil and 10 mils.

The overcoat may be selected from the group consisting of polyurethane, an ethylene acrylic acid copolymer, and a blend of a polyurethane and an ethylene acrylic acid copolymer. The fluoroelastomer may be a fluoroelastomer terpolymer of vinylidene fluoride (VDF), hexafluoropropylene (HFP) and tetrafluouroethylene (TFE).

In a second form thereof, the present invention provides a compact fluorescent light bulb, coated with a shatter containment coating according to the first form of the invention.

### BRIEF DESCRIPTION OF THE DRAWINGS

The above-mentioned and other features and advantages of this invention, and the manner of attaining them, will become more apparent and the invention itself will be better understood by reference to the following description of embodiments of the invention taken in conjunction with the accompanying drawings, wherein:

Fig. IA is a perspective view of a compact fluorescent light bulb having glass tubing formed as a plurality of helical turns;

Fig. IB is a perspective view of a compact fluorescent light bulb having glass tubing formed as a plurality of U-shaped segments;

Fig. 2 is a perspective view of a compact fluorescent light bulb made and tested in accordance with Examples 1-4 and having a coating composition in accordance with the present invention, the light bulb having been shattered from being dropped from a height;

Fig. 3 is perspective view showing a compact fluorescent light bulb, such as that of Figs. IA and 2, being dipped into, and withdrawn from, a container of a coating composition;

Fig. 4 is a perspective view of the coated light bulb of Fig. 4 being rotated in a horizontal position to drain excess coating;

Fig. 5 is a section view through a pair of adjacent turns of the coated light bulb of Figs. 3, 4, 6, and 7, showing the application of a thin air stream to break the webbing between the turns;

Fig. 6 shows perspective views of the coated light bulb of Fig. 4 being rotated while being held at an angle; and

Fig. 7 is a perspective view of the coated light bulb of Fig. 6 being rotated in a horizontal position while being exposed to a flow of air.

The exemplifications set out herein contain examples, which do not fall within the scope of the appended claims, but are useful for the undestanding of the claimed invention.

### DETAILED DESCRIPTION

The present invention provides a shatter containment coating composition for glass substrates, such as the glass tubing of compact fluorescent light bulbs as defined in claims 1 and 9, respectively. If the light bulb breaks or shatters, the coating aids in containing shattered glass fragments of the light bulb, as well as gases and other elements within the light bulb, to thereby aid in disposal of the light bulb and/or to prevent the escape of gases or other elements into the environment. The coating may be provided in the form of an aqueous dispersion having a relatively low viscosity such that, when coated onto a glass surface having complex geometry, such as the tubing of a compact fluorescent light bulb, for example, the coating can conform to the surfaces having the complex geometry. The coating is provided in one or more layers, including a base coat in the form of an aqueous dispersion of a comprising a fluoroelastomer and, optionally, one or more overcoats, and the coating is cured to form a film at a temperature of less than 150°C. When cured, the coating composition forms a tough, clear film that provides a high light transmittance and has been found to be effective in shatter containment when the light bulb is dropped onto a hard surface from a height as high as 8 or 9 feet (2.4 to 2.7 metres).

In one embodiment, the present coating may be applied to a compact fluorescent light bulb, such as the exemplary light bulbs 10a and 10b shown in Figs. IA and IB, respectively. Each of these light bulbs 10a and 10b generally includes a base portion 12 with an electrical contact 14 and a screw thread 16, magnetic or electronic ballast 18, and one or more sections of gas-filled tubing 20 extending from ballast 18. In use, electrical current from a suitable source flows from ballast 18 through the gas in tubing 20, which may be mercury vapor, for example, causing same to emit ultraviolet light, which in turn excites a phosphor coating on the interior of tubing 20, causing the phosphor coating to emit visible light.

The geometry of tubing 20 may vary depending on the type of light bulb and its intended application. For example, bulb 10a of Fig. IA includes tubing 20a having a spiral geometry including a plurality of helical turns 22. Bulb 10b of Fig. IB includes tubing 20b in the form of a pair of elongate, generally U-shaped segments 24. Tubing 20a and 20b each have a complex geometry which, as used herein refers to one or more non-planar or curved, perhaps tubular, surfaces that are bent or twisted through at least one angle of at least 90[deg.].

The present coating compositions provide a tough, clear or translucent coating for glass surfaces, such as the glass tubing of fluorescent light bulbs, for example, with the coatings having a high percentage of light transmittance, i.e., the ratio of light that passes through the coating to light that is reflected or absorbed by the coating, of 80% or greater, or 90% or greater, which may be determined by using a light meter to measure the ratio of emitted light from an uncoated light bulb to emitted light from a light bulb that has been coated by the present process.

Although the present invention is described in connection with the glass tubing of fluorescent light bulbs, such as compact fluorescent light bulbs, the present invention is also useful with other types of glass surfaces that may require a translucent, shatter containment coating, such as any glass surface having a complex geometry, as described above.

The term "shatter containment coating", as used herein, means a coating that aids in containing fragments of shattered glass or other fragments of a substrate to which the coating is applied wherein, in certain applications, the coating may additionally aid in containing, or delaying the release of, gases and/or other elements within the substrate to prevent same from escaping into an outside environment or to delay the escape of same into an outside environment. In some applications, the coating may itself also provide some impact resistance.

The present coatings are clear and ultraviolet (UV)-stable, and are able to be coated completely around glass tubing, such as the spiral glass tubing of a compact fluorescent light bulb described above, for example, such that the coating conforms to the complex geometry of the substrate tubing with minimum bridging between the loops or turns of the glass tubing.

The term "modified polyolefin" as used herein means a polymer based on polyethylene, in which at least some of the hydrogen atoms have been partially or completely replaced by other chemical species or functional groups. Suitable modified polyolefin SmA have the following chemical formula (I): 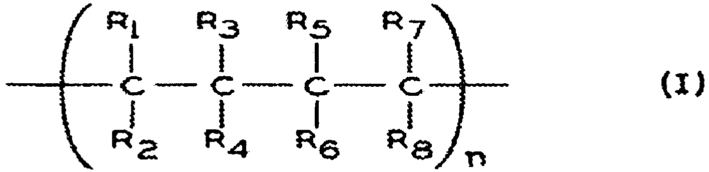 wherein R₁, R₂, R₃, R₄, R₅, R₆, R₇, and R₈ are each independently selected from hydrogen (H); hydroxyl (-OH); C₁-C₁₀ alkyl; C₁-C₁₀ alkoxy; halogens, such as fluorine (F) or chlorine (CI); fluoromethyl (-CF₃); perfluoromethyl ether (-O-CF₃); perfluoroethylether (-O-CF₂-CF₃); perfluoropropylether (-O-CF₂-CF₂-CF₃); carboxyl (-COOH); acrylate; ethylene (CH=CH₂); cyano (-CN); nitrile (-C≡N); and benzene radical.

In one embodiment, the polymer may be a fluoroelastomer, such as a terpolymer of vinylidene fluoride (VDF), hexafluoropropylene (HFP) and tetrafluouroethylene (TFE); polymers of acrylic acid, such as ethylene acrylic acid copolymer (EAA), acrylic butadiene stryrene copolymer (ABS); vinyl alcohol; vinyl acetate; or vinyl butyral, such as polyvinyl butyral (PVB). Polyurethanes, such as clear aliphatic polyurethanes, may also be used.

One suitable fluoroelastomer is Tecnoflon® TN latex, available from Solvay Solexis, Inc., an aqueous emulsion of a fluoroelastomer terpolymer of vinylidene fluoride (VDF), hexafluoropropylene (HFP) and tetrafluouroethylene (TFE) having a solids content of 70 wt.% (Technoflon(R) is a registered trademark of Solvay Solexis S.p.A.). One suitable ethylene acrylic acid copolymer (EAA) is MICA EAA dispersion, available from MICA Corporation of Shelton, CT, which is a stabilized dispersion of ethylene acrylic acid copolymer having a solids content of about 20 wt.%. One suitable ABS is Nychem^{(™)} 1570X75, a carboxyl-modified ABS emulsion available from Emerald Performance Materials LLC, having a solids content Of 41%. One suitable PVB is Butvar® polyvinyl butyral resin dispersion BR resin, available from Solutia, Inc. of St. Louis, MO, a stabilized aqueous dispersion of plasticized polyvinyl butyral having a solids content of 50 to 52 wt.% (Butvar® is a registered trademark of Solutia, Inc.).

One suitable aliphatic polyurethane is Hybridur® 560, available from Air Products and Chemicals, Inc. of Allentown, PA, an aqueous, anionically stabilized urethane-acrylic hybrid polymer dispersion having a solids content of 40 wt.% and a Brookfield viscosity of less than 150 centipoise (Hybridur® is a registered trademark of Air Products and Chemicals, Inc.).

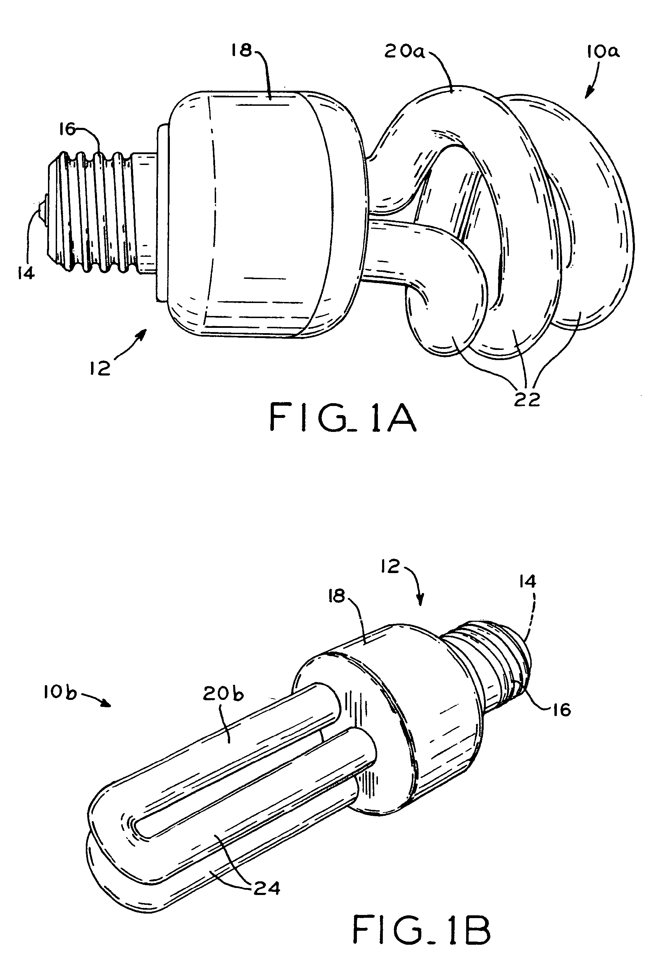

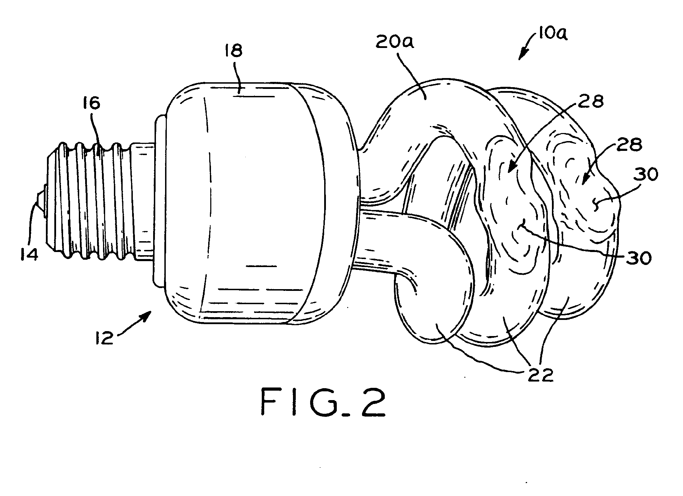

The present coatings are also characterized in that same may be cured at relatively low temperatures, such as 200° C or lower, 150° C or lower, or even 120° C or lower, i.e., the present coatings have film-forming properties when cured at such temperatures. The coating composition may also be provided in the form of an aqueous dispersion, which will typically have between 10 wt. % and 75 wt. % solids, though same may vary. Advantageously, providing the coating in the form of an aqueous dispersion allows the viscosity of the coating to be relatively low, such as a viscosity of less than 60 seconds, Zahn cup#3, at 77°F (25°C), which is about 600 centipoise or less. Alternatively, the viscosity could be 550, 500, or 450 centipoise or less, or even 200, 150, or 100 centipoise or less. This relatively low viscosity permits the coating to more easily conform to and coat surfaces having complex geometry, such as the spiral turns of tubing 20a of bulb 10a of Figs. 1A and 2, while minimizing any bridging or webbing that may form between adjacent turns of the tubing.

The thickness of the coating, after curing, will typically be between 1 and 10 mils (0.0254 mm and 0.254 mm) and, more particularly, may be as little as 1, 2, 3 or 4 mils (0.0254 mm, 0.0508 mm, 0.0762 mm, or 0.1016 mm), or as great as 10, 9, 8, or 7 mils (0.254 mm, 0.2286 mm, 0.2032 mm, or 0.1778 mm).

The coating composition may include additives, such as surfactants, fillers, pigments, etc. One suitable additive is a defoamer, typically present in an amount of less than 1.0 wt.%, less than 0.5 wt.%, or less than 0.1 wt.%.

The coating may be provided in one or more layers, including a base coat and one or more overcoats. The base coat will be in direct contact with the substrate and may be, for example, a flouroelastomer or an aliphatic polyurethane, each of which provide good substrate adhesion. The overcoat may be, for example, an aliphatic polyurethane, EAA, ABS, or a suitable blend of the foregoing materials.

Prior to coating the substrate, the substrate may be cleaned by application of a suitable solvent, such as methyl ethyl ketone (MEK) and allowed to dry. Then, as described in further detail below in the Examples, the substrate to be coated, such as the tubing of a compact fluorescent light bulb, is dipped into the coating composition and is then removed. Then, the light bulb is rotated at various angles to remove excess coating by dripping, and to distribute the coating evenly around the glass tubing of the light bulb. When flow of the coating is stopped and the coating is evenly distributed, the light bulb is placed in a curing oven and then cured at a temperature typically below 150° C to form the coating or film.

After the initially-applied coating is cured, an optional overcoat or topcoat may be applied to harden the primary coating and/or reduce or eliminate softness or tackiness in the primary coating. In one embodiment, the light bulb with the cured coating is dipped into a dispersion of the second coating and cured in manner similar to the primary coating.

### EXAMPLE 1

### Coating a compact florescent light bulb with a fluoroelastomer dispersion

A coating composition was provided in the form of Tecnoflon TN latex (Solvay Solexis, Inc.). A compact fluorescent light bulb 10a of the type shown in Figs. 1A and 2 was dipped into the aqueous dispersion and withdrawn. Then, the light bulb was slowly rotated by hand to remove excess dispersion. The dispersion webbing formed between the spiral glass turns of the tubing was removed with an air knife. The light bulb was further rotated while the coating dried at room temperature to evenly distribute the coating around the glass tubing.

Then, the light bulb was placed in an oven and cured at 100°C for 15 minutes to cure the dispersion and form a cured base coat or film. The light bulb was cooled to room temperature and then dipped into a polymer dispersion (Hybridur 560, Air Products and Chemicals, Inc.), followed by coating and curing as described above to provide an overcoat.

### EXAMPLE 2

### Coating a compact fluorescent light bulb with a PVB dispersion

A coating composition was provided in the form of Butvar® polyvinyl butyral resin dispersion BR resin (Solutia, Inc.). A compact fluorescent light bulb 10a of the type shown in Figs. 1A and 2 was dipped into the dispersion and withdrawn. Then, the light bulb was slowly rotated by hand to remove excess dispersion. The dispersion webbing formed between the spiral glass turns of the tubing was removed with an air knife. The light bulb was further rotated while the coating dried at room temperature to evenly distribute the coating around the glass tubing.

Then, the light bulb was placed in an oven and cured at 100°C for 15 minutes to cure the dispersion and form a cured coating or film.

### EXAMPLE 3

### Impact and containment test

The coated fluorescent light bulbs from Examples 1 and 2 were dropped from a height of 9 feet (2.74 m) onto a concrete surface. Referring to Fig. 2, the light bulbs 10a were themselves conventional, each generally including a base portion 12 having a screw thread 16 for attachment to a light receptacle and an electronic control mechanism, i.e., ballast 18, as well as spiral glass tubing 20a that was coated as described in Examples 1 and 2 with a shatter containment coating.

Although glass tubing 20a was shattered in an area 28 thereof which contacted the concrete surface, it may be observed from Fig. 1 that coating 30 was not itself broken or ruptured, but rather effectively contained shattered fragments of glass tubing 20a, as well as gases and other elements within glass tubing 20a.

### EXAMPLE 4

### Coating a compact fluorescent light bulb with modified polyolefin and polyurethane dispersions

In this example, a spiral compact fluorescent light bulb 10a of the type shown in Figs. 1A and 2 was coated with a variety of varying coating compositions.

Coating compositions.

The coating components were as follows. The fluoroelastomer was Tecnoflon TN latex, available from Solvay Solexis, Inc., an aqueous emulsion of a fluoroelastomer terpolymer of vinylidene fluoride (VDF), hexafluoropropylene (HFP) and tetrafluouroethylene (TFE) having a solids content of 70 wt.%. The polyurethane (PU) was Hybridur 560, available from Air Products and Chemicals, Inc. of Allentown, PA, an aqueous, anionically stabilized urethane-acrylic hybrid polymer dispersion having a solids content of 40 wt.% and a Brookfield viscosity of less than 150 mPa/s. The ethylene acrylic acid copolymer (EAA) was MICA EAA dispersion, available from MICA Corporation of Shelton, CT, which is a stabilized dispersion of ethylene acrylic acid copolymer having a solids content of about 20 wt.%. The EAA/PU blend was a 1:1 liquid weight blend of the foregoing EAA and PU.

Coating preparation.

The coatings were prepared as aqueous dispersion having the above-listed solids contents. Less than 1.0 wt% of a defoamer was added to each coating composition.

Coating method.

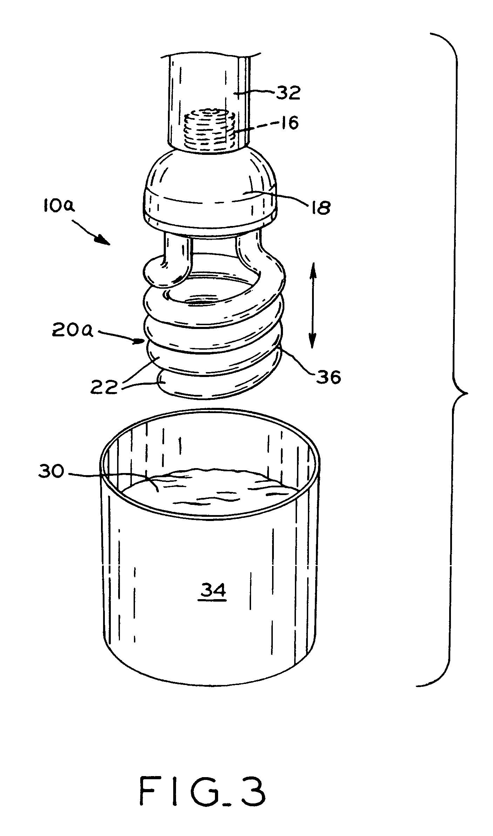

The method by which light bulbs 10a were coating will be described with reference to Figs. 3-7. Bulb 10a was mounted in a suitable chuck 32 for handling and manipulating bulb 10a through the various coating steps described below. In an automated process, chuck 32 may be controlled by a machine or robot, for example. Referring to Fig. 3, tubing 20a of bulb 10a was dipped into a suitable container 34 containing the coating composition to fully immerse all of the turns of tubing 20a in the coating composition, followed by withdrawing bulb 10a from the coating composition. After this step, some bridging or webbing 36 is typically present between the turns 22 of tubing 20a.

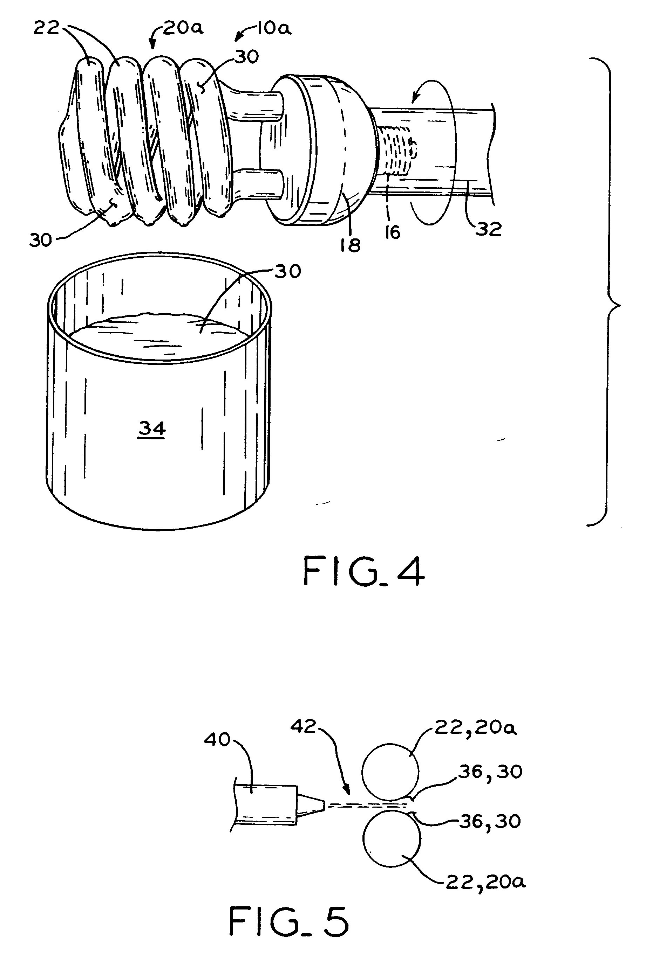

Then, bulb 10a was first rotated slowly at an angle for about 30 seconds or less, and then was slowly rotated in a horizontal position as shown in Fig. 4 for about 30 seconds to allow excess coating 30 to drip back into container 34. In these initial steps, most of the bridging or webbing 36 initially present between adjacent turns of tubing 20a will typically separate and drain into container 34, and the foregoing times may be increased or decreased to achieve this condition as necessary.

Referring to Fig. 5, at any time in the procedure, when necessary, an air knife 40 or other device that is capable of providing a thin jet of air 42 may be used to separate any bridging or webbing 36 that may extent between adjacent turns 22 of tubing 20a.

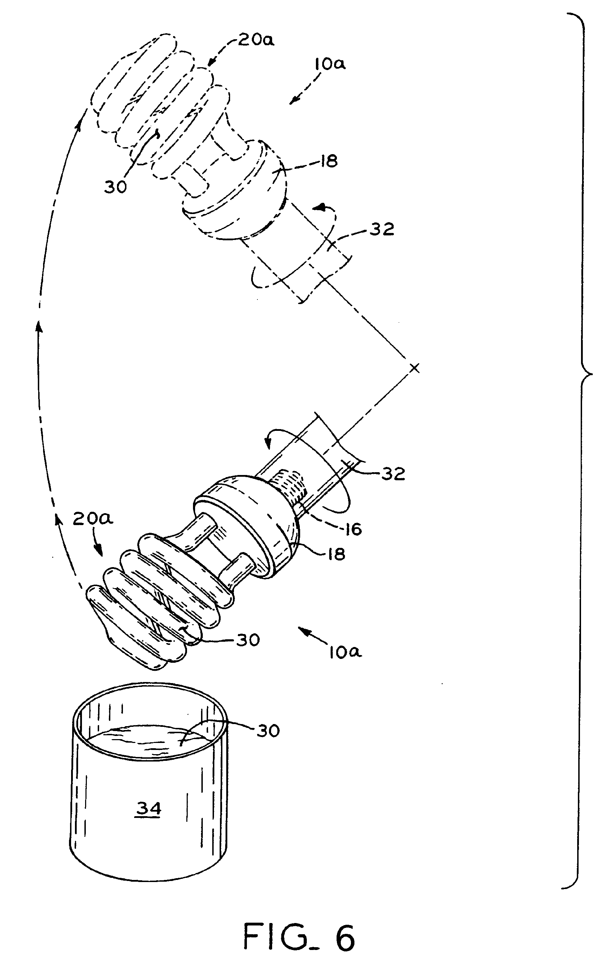

Referring to Fig. 6, bulb 10a may be held at either an upward angle, illustrated in dash lines in Fig. 6, and/or a downward angle, illustrated in solid lines in Fig. 6, and rotated slowly to allow the coating 30 to slowly migrate either toward the ballast 18 or toward the end of the glass 20a tubing, respectively. In this Example, the bulbs 10a were rotated at about 25 rpm for about 30 seconds and were held at an upward angle of about 135°C until flow of the coating is reduced and/or no bridging or webbing between turns is observed.

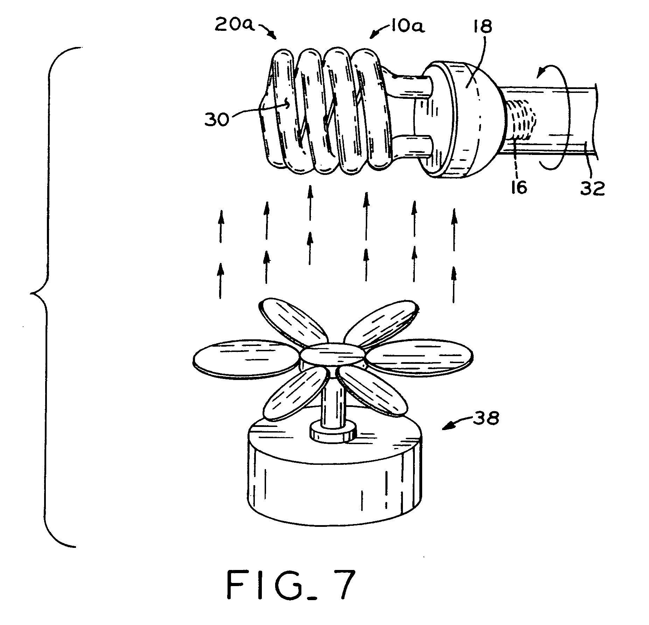

Referring to Fig. 7, bulb 10a was then held in a horizontal position and slowly rotated about 5 minutes while a flow of heated air at a temperature between 60°C and 70°C was applied from a fan or blower 38 across bulb 10a to dry the coating 30 to a point where no movement or flow of the coating 30 was observed. The duration of this step depends on the amount of air flow and temperature of the air, with the object of achieving an initial set of the coating such that the coating, while not yet cured, will not flow to enable the coated light bulb may be held stationary during the subsequent curing step without flow of the coating. In a final step, the coating 30 was cured by flashing in an oven. In this Example, the coating 30 was cured by placing bulb 10a in an oven and flashing at 90°C for ten minutes, followed by flashing for an additional ten minutes at 115°C.

Following curing, bulb 10a was placed under forced cooling air for several minutes to cool bulb 10a. The foregoing coating process may be repeated to provide several layers of coating and/or to build the total coating thickness as desired.

Results.

The coating compositions and results of the drop test of Example 3, conducted in the present Example at a height of 8 feet (2.44 m), are set forth in Table 1 below. In Table I below, some of the coatings included multiple layers, with each layer successively applied according to the foregoing procedure. For each coating, the base coat is the first listed component in Table 1, with each overcoat being the next one or two listed components in Table 1, proceeding downwardly in each column. For example, Coating 1 included a base coat of fluoroelastomer and an overcoat of EAA, while Coating 2 included a base coat of fluoroelastomer, a first overcoat of PU, and a second overcoat of EAA.

**Table 1**

| **Coating #** | **1** | **2** | **3** | **4** | **5** | **6** | **7** | **8** |
|---|---|---|---|---|---|---|---|---|
| **Fluoro-elastomer (weight)(g)** | 2.61 | 3.1 | -- | -- | -- | 1.82 | 2.61 | 2.74 |
| **PU (weight)(g)** | -- | 0.9 | 2.75 | 1.1 | 2.09 | 1.03 | 1.02 | -- |
| **EAA (weight)(g)** | 1.02 | 0.26 | 0.93 | -- | -- | -- | -- | -- |
| **EAA/PU blend (weight)(g)** | -- | -- | -- | 2.73 | 0.51 | 1.22 | -- | 1.21 |
| **Total coating weight (g)** | 3.63 | 4.26 | 3.68 | 3.83 | 2.6 | 4.07 | 3.63 | 3.95 |
| **Total coating/film thickness (mils)** | | | | | 3.6 | 7.0 | | |
| **Drop test result** | Pass | Pass | Pass | Pass | Pass | Pass | Pass | Pass |

As indicated in Table 1 above, each of the coatings passed the drop test, with the bulbs appearing similar to that shown in Fig. 2 and discussed above in connection with Examples 1-3.

While this invention has been described as having a preferred design, the present invention can be further modified. This application is therefore not intended to be limited to the specific embodiments described above.

## Claims

1. A method of applying a shatter containment coating to a glass substrate, **characterized by** the steps of:
providing a glass substrate having at least one or more non-planar or curved surfaces that are bent or twisted through at least one angle of at least 90°;
applying a base coat to the substrate
**characterised in that** the base coat is applied in the form of an aqueous dispersion of a fluoroelastomer to the substrate; and
curing the base coat at a temperature of 150°C or less.

2. The method of claim 1, **characterized by** said method including the additional steps, after said curing step, of:
applying an overcoat to the base coat in the form of an aqueous dispersion of a modified polyolefin; and
curing the overcoat.

3. The method of claims 1 or 2, **characterized in that** said providing step further comprises providing the substrate in the form of a compact fluorescent light bulb having glass tubing including a plurality of helical turns, and said applying a base coat step further comprises immersing the glass tubing in the aqueous dispersion of a modified polyolefin.

4. The method of claims 1 or 2, **characterized in that** said providing step further comprises providing the substrate in the form of a compact fluorescent light bulb having glass tubing including a plurality of bent sections, and said applying step further comprises immersing the glass tubing in the aqueous dispersion of a fluoroelastomer.

5. The method of any of the preceding claims, **characterized in that** the aqueous dispersion ofa fluoroelastomer has a viscosity of 600 centipoise or less.

6. The method of any of the preceding claims, **characterized in that** the cured coating has a thickness of between 0.0254 mm and 0.254 mm (1 mil and 10 mils).

7. The method of claim 2, wherein said overcoat is selected from the group consisting of polyurethane, an ethylene acrylic acid copolymer, and a blend of a polyurethane and an ethylene acrylic acid copolymer.

8. The method of claim 7, wherein the fluoroelastomer is a fluoroelastomer terpolymer of vinylidene fluoride (VDF), hexafluoropropylene (HFP) and tetrafluouroethylene (TFE).

9. A compact fluorescent light bulb, coated with a shatter containment coating comprising a base coat made of a fluoroelastomer by the method of any of the preceding claims.

## Patentansprüche

1. Verfahren zum Aufbringen einer Splitterschutzbeschichtung auf ein Glassubstrat, **gekennzeichnet durch** die folgenden Schritte:
Bereitstellen eines Glassubstrats mit mindestens einer oder mehreren nicht planaren oder gekrümmten Oberflächen, die in mindestens einem Winkel von mindestens 90° gebogen oder gedreht sind;
Aufbringen einer Grundierung auf das Substrat,
**dadurch** gekennzeichnet, dass die Grundierung in Form einer wässrigen Dispersion eines Fluorelastomers auf das Substrat aufgebracht ist; und
Aushärten der Grundierung bei einer Temperatur von 150°C oder weniger.

2. Verfahren nach Anspruch 1, **dadurch gekennzeichnet, dass** das Verfahren im Anschluss an den Schritt des Aushärtens die folgenden zusätzlichen Schritte einschließt:
Aufbringen einer Beschichtung in Form einer wässrigen Dispersion eines modifizierten Polyolefins auf die Grundierung; und
Aushärten der Beschichtung.

3. Verfahren nach Anspruch 1 oder 2, **dadurch gekennzeichnet, dass** der Schritt des Bereitstellens des Weiteren das Bereitstellen des Substrats in Form einer Kompaktleuchtstofflampe umfasst, die eine röhrenförmige Glasstruktur aufweist, die eine Vielzahl an Helixwindungen einschließt, und dass der Schritt des Aufbringens einer Grundierung des Weiteren das Eintauchen der röhrenförmigen Glasstruktur in die wässrige Dispersion eines modifizierten Polyolefins umfasst.

4. Verfahren nach Anspruch 1 oder 2, **dadurch gekennzeichnet, dass** der Schritt des Bereitstellens des Weiteren das Bereitstellen des Substrats in Form einer Kompaktleuchtstofflampe umfasst, die eine röhrenförmige Glasstruktur aufweist, die eine Vielzahl an gekrümmten Abschnitten einschließt, und dass der Schritt des Aufbringens des Weiteren das Eintauchen der röhrenförmigen Glasstruktur in die wässrige Dispersion eines Fluorelastomers umfasst.

5. Verfahren nach einem der vorhergehenden Ansprüche, **dadurch gekennzeichnet, dass** die wässrige Dispersion eines Fluorelastomers eine Viskosität von 600 Centipoise oder weniger aufweist.

6. Verfahren nach einem der vorhergehenden Ansprüche, **dadurch gekennzeichnet, dass** die ausgehärtete Beschichtung eine Dicke von zwischen 0,0254 mm und 0,254 mm (1 mil und 10 mil) aufweist.

7. Verfahren nach Anspruch 2, wobei die Beschichtung ausgewählt ist aus der Gruppe bestehend aus Polyurethan, einem Ethylen/Acrylsäure-Copolymer und einem Gemisch aus einem Polyurethan und einem Ethylen/Acrylsäure-Copolymer.

8. Verfahren nach Anspruch 7, wobei es sich bei dem Fluorelastomer um ein Fluorelastomer-Terpolymer von Vinylidenfluorid (VDF), Hexafluorpropylen (HFP) und Tetrafluorethylen (TFE) handelt.

9. Kompaktleuchtstofflampe, die mittels des Verfahrens nach einem der vorhergehenden Ansprüche mit einer Splitterschutzbeschichtung beschichtet ist, die eine aus einem Fluorelastomer hergestellte Grundierung umfasst.

## Revendications

1. Procédé d'application d'un revêtement de retenue de bris sur un substrat de verre, **caractérisé en ce qu'**il comprend les étapes suivantes :
la fourniture d'un substrat de verre présentant au moins une ou plusieurs surfaces non planes ou incurvées qui sont coudées ou tordues selon au moins un angle d'au moins 90° ;
l'application d'une couche de base sur le substrat
**caractérisée en ce que** la couche de base est appliquée sous la forme d'une dispersion aqueuse d'un fluoroélastomère sur le substrat ; et
le durcissement de la couche de base à une température de 150°C ou moins.

2. Procédé selon la revendication 1, **caractérisé en ce que** ledit procédé comprend les étapes supplémentaires suivantes, après ladite étape de durcissement :
l'application, sur la couche de base, d'une surcouche sous la forme d'une dispersion aqueuse d'une polyoléfine modifiée ; et
le durcissement de la surcouche.

3. Procédé selon la revendication 1 ou 2, **caractérisé en ce que** ladite étape de fourniture comprend en outre la fourniture du substrat sous la forme d'une ampoule fluorescente compacte comportant un tube de verre comprenant une pluralité de spires hélicoïdales, et ladite étape d'application d'une couche de base comprend en outre l'immersion du tube de verre dans la dispersion aqueuse d'une polyoléfine modifiée.

4. Procédé selon la revendication 1 ou 2, **caractérisé en ce que** ladite étape de fourniture comprend en outre la fourniture du substrat sous la forme d'une ampoule fluorescente compacte comportant un tube de verre comprenant une pluralité de parties coudées, et ladite étape d'application comprend en outre l'immersion du tube de verre dans la dispersion aqueuse d'un fluoroélastomère.

5. Procédé selon l'une quelconque des revendications précédentes, **caractérisé en ce que** la dispersion aqueuse d'un fluoroélastomère a une viscosité de 600 centipoises ou moins.

6. Procédé selon l'une quelconque des revendications précédentes, **caractérisé en ce que** le revêtement durci a une épaisseur comprise entre 0,0254 mm et 0,254 mm (1 mil et 10 mils).

7. Procédé selon la revendication 2, **caractérisé en ce que** ladite surcouche est choisie dans le groupe constitué d'un polyuréthane, d'un copolymère éthylène-acide acrylique, et d'un mélange d'un polyuréthane et d'un copolymère éthylène-acide acrylique.

8. Procédé selon la revendication 7, dans lequel le fluoroélastomère est un terpolymère fluoroélastomère de fluorure de vinylidène (VDF), d'hexafluoropropylène (HFP) et de tétrafluoroéthylène (TFE).

9. Ampoule fluorescente compacte revêtue d'un revêtement de retenue de bris comprenant une couche de base réalisée dans un fluoroélastomère au moyen du procédé selon l'une quelconque des revendications précédentes.
